(19)

Europäisches Patentamt
European Patent Office
Office européen des brevets

(11) **EP 3 199 653 A1**

(12) **EUROPEAN PATENT APPLICATION**
published in accordance with Art. 153(4) EPC

(43) Date of publication:
02.08.2017 Bulletin 2017/31

(21) Application number: 15857760.1

(22) Date of filing: 04.11.2015

(51) Int Cl.:
*C22C 9/04* (2006.01)      *B22D 11/00* (2006.01)
*B22D 11/20* (2006.01)      *F16C 17/02* (2006.01)
*F16C 33/12* (2006.01)      *C22C 1/02* (2006.01)

(86) International application number:
**PCT/JP2015/080988**

(87) International publication number:
**WO 2016/072405 (12.05.2016 Gazette 2016/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 04.11.2014 JP 2014224358

(71) Applicant: **Taiho Kogyo Co., Ltd**
**Toyota-shi**
**Aichi 471-8502 (JP)**

(72) Inventors:
• **EBATA, Yuhei**
  **Toyota-shi**
  **Aichi 471-8502 (JP)**
• **MATSUMOTO, Shinji**
  **Toyota-shi**
  **Aichi 471-8502 (JP)**

(74) Representative: **Hart-Davis, Jason et al**
**Cabinet Beau de Loménie**
**158, rue de l'Université**
**75340 Paris Cedex 07 (FR)**

(54) **COPPER ALLOY FOR SLIDING BEARING, AND SLIDING BEARING**

(57)     There are provided a copper alloy for a bearing and a bearing in which a Mn-Si compound is prevented from being broken and becoming a foreign matter. The copper alloy for a bearing and the bearing according to the present invention contain 25 wt% or more and 48 wt% or less of Zn, 1 wt% or more and 7 wt% or less of Mn, 0.5 wt% or more and 3 wt% or less of Si and 1 wt% or more and 10 wt% or less of Bi, the balance consisting of inevitable impurities and Cu, and are characterized in that the average width value among Mn-Si primary crystal particles dispersed in a sliding surface on which a counter shaft slides is 3 $\mu$m or more.

FIG. 2A

EP 3 199 653 A1

(Cont. next page)

FIG. 2B

FIG. 2C

**Description**

TECHNICAL FIELD

The present invention relates to a brass-based copper alloy for a bearing and a bearing.

BACKGROUND ART

A bearing in which Mn-Si compounds are crystallized out on a sliding surface is known (see Patent Literature 1). In Patent Literature 1, particles of the Mn-Si compounds are elongated and dispersed in the sliding direction of a counter shaft.

CITATIONS LIST

Patent Literature 1: Japanese Patent No. 3718147

SUMMARY OF INVENTION

TECHNICAL PROBLEMS

However, excessive extension of the Mn-Si compounds leads to problems that the Mn-Si compounds become thin in a direction orthogonal to the extending direction and are easily broken by shaft load in a direction vertical to the sliding surface. Also, there is a problem that the broken Mn-Si compounds fall off the bearing and become foreign matter, thereby causing wear of the bearing and damage of the counter shaft due to the foreign matter.

The present invention has been made in light of the aforementioned problems, and an object thereof is to provide a copper alloy for a bearing and a bearing in which Mn-Si compounds are prevented from being broken and becoming foreign matters.

SOLUTIONS TO PROBLEMS

In order to attain the aforementioned object, the copper alloy for a bearing and the bearing according to the present invention contains 25 wt% or more and 48 wt% or less of Zn, 1 wt% or more and 7 wt% or less of Mn, 0.5 wt% or more and 3 wt% or less of Si and 1 wt% or more and 10 wt% or less of Bi, the balance consisting of inevitable impurities and Cu, and the average width value among Mn-Si primary crystal particles dispersed in a sliding surface on which a counter shaft slides is 3 $\mu$m or more.

In the thus-configured copper alloy for a bearing and the bearing, the average width value among the Mn-Si primary crystal particles dispersed in the sliding surface on which the counter shaft slides is 3 $\mu$m or more, and thus the Mn-Si primary crystals can be prevented from being broken when force is applied in the width direction of the Mn-Si primary crystals. Accordingly, the Mn-Si primary crystals can be prevented from being broken and becoming foreign matter. The "width direction of the Mn-Si primary crystals" refers to a direction orthogonal to the length direction of the Mn-Si primary crystals. The "length direction of the Mn-Si primary crystals" refers to a direction of a line segment of which both end points are present on the contour of the Mn-Si primary crystals, when the line segment is formed so as to attain the maximum length.

The incorporation of 25.0 wt% or more of Zn can enhance the strength of the Cu-Zn matrix and suppress sulfurization corrosion caused by the S component in a lubricant oil. It is noted that 35.0 wt% or more of Zn is incorporated so that the Mn-Si primary crystal particles can grow up to such a size as to obtain more excellent wear resistance. Also, the Zn content is suppressed to 48.0 wt% or less, thereby making it possible to prevent deposition of a large amount of the $\gamma$ phase in a Cu-Zn matrix and embrittlement of the Cu-Zn matrix.

The incorporation of 1.0 wt% or more of Mn and 0.5 wt% or more of Si can lead to deposition of the Mn-Si primary crystal particles in an amount sufficient to improve the wear resistance. On the other hand, the Mn content is suppressed to 7.0 wt% or less, and the Si content is suppressed to 3.0 wt% or less, thereby making it possible to prevent reduction in toughness due to excessive deposition of the Mn-Si primary crystals. Further, 1 wt% or more and 10 wt% or less of Bi is incorporated, whereby the seizure resistance can be improved by soft Bi particles which are present in the sliding surface. Also, even when the Mn-Si primary crystals are broken, the Bi particles can embed the broken Mn-Si primary crystals and suppress the occurrence of foreign matter. It is noted that the copper alloy of the present invention can contain inevitable impurities.

Also, the copper alloy for a bearing and the bearing according to the present invention may have a Vickers hardness of 100 or more and 200 or less. By suppressing the Vickers hardness in this manner, even when the Mn-Si primary crystals are broken to form protrusions of the Mn-Si primary crystals, they keep conformability to the counter shaft, thereby making it possible to suppress the protrusions of the Mn-Si primary crystals. Therefore, the protrusions of the Mn-Si primary crystals can be prevented from damaging the counter shaft.

BRIEF DESCRIPTION OF DRAWINGS

FIG. 1 is a perspective view of a radial bearing.
FIGs. 2A and 2B show photomicrographs of a sliding surface of the radial bearing; and FIG. 2 C is a schematic view of Mn-Si primary crystals.
FIG. 3A is an explanatory view of a wear test; and FIG. 3B is a schematic view explaining a wear volume.
FIGs. 4A to 4C show graphs of the width of the Mn-Si primary crystal particles; and FIGs. 4D to 4F show graphs of the length of the Mn-Si primary crystal particles.

DESCRIPTION OF EMBODIMENTS

An embodiment of the present invention will now be described in the following order.

(1) Configuration of radial bearing
(2) Method for producing radial bearing
(3) Experimental results
(4) Other embodiments

(1) Configuration of radial bearing

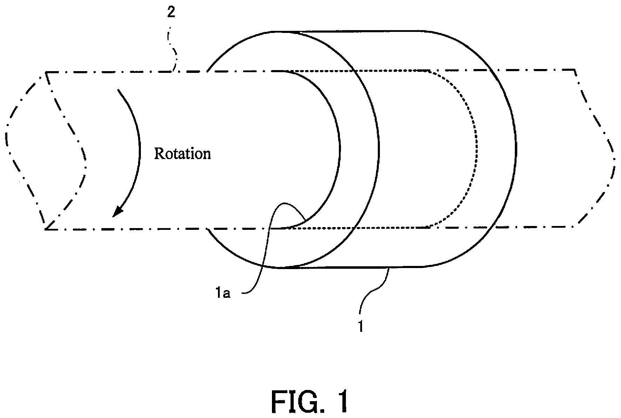

FIG. 1 is a perspective view of a radial bearing 1 (floating bush) as a bearing which is formed of a copper alloy for a bearing according to one embodiment of the present invention. The radial bearing 1 supports, in the radial direction, the load applied onto a counter shaft 2 (dashed-dotted line) which is provided with a turbine blade and a compressor blade on both ends in the axial direction, for example, in a turbo type supercharger for an internal combustion engine. The radial bearing 1 is formed cylindrically, and has an annular cross section orthogonal to the axial direction. By virtue of this, the radial bearing 1 can bear the counter shaft 2 on the inside. The radial bearing 1 according to this embodiment has an inner diameter of 7.5 mm and an outer diameter of 13.6 mm. An oil film of an engine oil as a lubricant oil is formed between the radial bearing 1 and the counter shaft 2. Upon rotation of the counter shaft 2, the counter shaft 2 slides on a sliding surface 1a which is an internal surface of the radial bearing 1. It is noted that, though not shown, a thrust bearing which supports the load applied onto the counter shaft 2 in the thrust direction may also be formed of the same copper alloy as that for the radial bearing 1. Further, the radial bearing 1 may be formed by combining two half-split bearing parts into a cylindrical shape.
Hereinafter, a copper alloy for a bearing which constitutes the radial bearing 1 will be described. The copper alloy for a bearing contains 40.0 wt% of Zn, 4.0 wt% of Mn, 1.4 wt% of Si and 3.5 wt% of Bi, the balance consisting of Cu and inevitable impurities. The inevitable impurities include Mg, Ni, Ti, B, Pb, Cr and the like, and are impurities mixed during refining or scrapping. The entire content of the inevitable impurities is 1.0 wt% or less. The masses of the respective elements in the copper alloy for a bearing were measured by using an ICP emission spectrophotometer (ICPS-8100 manufactured by Shimadzu Corporation).

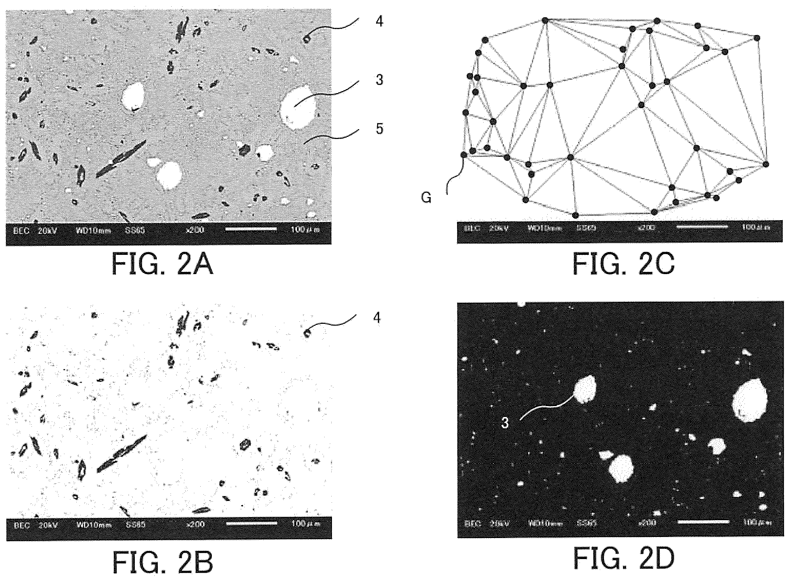

FIG. 2A shows a photomicrograph (200x) of the sliding surface 1a of the radial bearing 1. The photomicrograph of the sliding surface 1a of the radial bearing 1 was taken with an electron microscope (JSM6610A manufactured by JEOL Ltd.). As shown in FIG. 2A, Mn-Si primary crystals 4 (black) and Bi particles 3 are dispersed in a Cu-Zn matrix 5 (gray) in the sliding surface 1a of the radial bearing 1. The Mn-Si primary crystals 4 have a bar-shaped, circular or annular cross section, and the Bi particles 3 have an almost circular cross section.
An image of the $200\times$ or $400\times$ photomicrograph of the sliding surface 1 a (hereinafter, analysis image) was input into an image analyzing device (LUZEX_AP manufactured by NIRECO), and the analysis image was analyzed by the image analyzing device in the following procedures. Firstly, the brightness and contrast of the analysis image were controlled so that images of Mn-Si compounds (including a eutectic of Mn-Si and Cu-Zn in addition to the Mn-Si primary crystals 4) were black and that images other than those of the Mn-Si compounds were white. FIG. 2 B shows an analysis image controlled so that images of the Mn-Si primary crystals 4 were black and that images other than those of the Mn-Si compounds were white. The analysis image shown in FIG. 2 B is binarized with predetermined brightness, thereby separating the images of the Mn-Si compounds from the images other than those of the Mn-Si primary crystals 4. Further, the circle equivalent diameter (measurement parameter: HEYWOOD) of the images of the Mn-Si primary crystals 4 was measured to extract the images of the Mn-Si primary crystals 4 having a circle equivalent diameter of 3 $\mu$m or more. This is because the Mn-Si compounds (mainly eutectics of Mn-Si and Cu-Zn) having a circle equivalent diameter of less than 3 $\mu$m are excluded from the target for analysis.

Then, the width (measurement parameter: width) and length (measurement parameter: maximum length) were measured by the image analyzing device, for the respective images of the particles of the Mn-Si primary crystals 4 having a circle equivalent diameter of 3 $\mu$m or more. The average values for the width and length among the images of the particles of the Mn-Si primary crystals 4 having a circle equivalent diameter of 3 $\mu$m or more were calculated. The images of the particles of the Mn-Si primary crystals 4 having a circle equivalent diameter of 3 $\mu$m or more had an average width value of 8 $\mu$m and an average length value of 20 $\mu$m.

FIG. 2 C is a schematic view of the images of the particles of the Mn-Si primary crystals 4. As shown in FIG. 2 C, the length of the images of the particles of the Mn-Si primary crystals 4 is the length of a line segment L having the maximum length, among line segments L of which both ends are positioned on the contour X of the images of the particles of the Mn-Si primary crystals 4. The direction of the line segment L is defined as length direction, and the direction orthogonal to the line segment L is defined as width direction. Next, two straight lines M1, M2 were formed which are parallel with the line segment L, with the line segment L being held therebetween, and which hold the images of the particles of the Mn-Si primary crystals 4 therebetween from the width direction. Then, the distance between the straight lines M1, M2 in the width direction was measured as the width of the Mn-Si primary crystals 4. It is noted that, when the images of the particles of the Mn-Si primary crystals 4 had an annular shape, the internal contour was neglected.

The Vickers hardness of the radial bearing 1, when measured, was HV 185. Concerning the Vickers hardness, the size of an indentation (average length value between two diagonal lines) formed, with 1-kg load, on a measurement point on a test piece was measured as the Vickers hardness at the measurement point by means of a micro-Vickers hardness meter (MVK-EII manufactured by Akashi Seisakusho Co., Ltd.). The average value among the Vickers hardnesses measured at three to seven measurement points on the radial bearing 1 was adopted as the Vickers hardness of the radial bearing 1.

(1-1) Evaluation of wear resistance

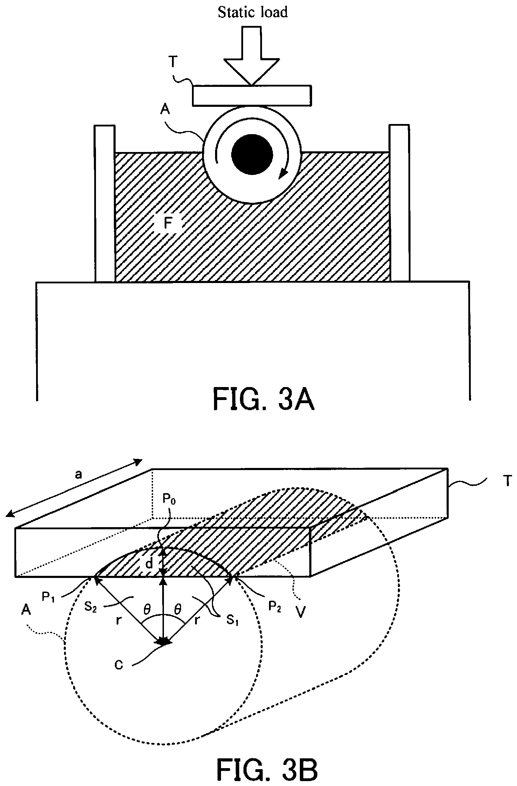

In order to evaluate the wear resistance of the copper alloy for a bearing constituting the radial bearing I, a wear test was conducted. FIG. 3A is a schematic view explaining a cylindrical flat plate type friction/wear tester used in the wear test. The wear test was conducted by rotating a columnar counter shaft A in a state where it was partially immersed in an engine oil (liquid paraffin) F as a lubricant oil, and contacting a test piece T with the counter shaft A so that predetermined static load was applied onto the counter shaft A. The test piece T was formed into a planar plate shape under the same conditions as those for the copper alloy for a bearing constituting the radial bearing 1. The counter shaft A was formed of a material equivalent to that for the counter shaft 2 to be borne by the radial bearing 1, specifically, SCM415 (chromium-molybdenum steel) subjected to hardening. The length a of the test piece T in the rotation axis direction of the counter shaft A was defined as 10 mm, and the radius r of the bottom surface of the counter shaft A was defined as 20 mm. The rotation speed of the counter shaft A was regulated so that the relative moving speed b of the counter shaft A with respect to the test piece T at the sliding part was 200 mm/sec. Also, the static load was defined as 139 N; the temperature of the lubricant oil was defined as room temperature; and the test time c was defined as 3600 sec. (1 hour). After the wear test conducted under the above conditions, the depth profile of the sliding part on which the counter shaft A slid, in the test piece T, was measured with a surface roughness meter (SE3400 manufactured by Kosaka Laboratory Ltd.). Then, the difference in depth between the flat part (non-worn part) and the deepest part in the depth profile was measured as wear depth d.

Further, the specific wear quantity K was calculated based on the following Equation (1).

[Equation 1]

$$K = \frac{V}{L \times W} \quad \cdots \ (1)$$

L represents a sliding distance, which is the surface length of the counter shaft A having slid on the test piece T in the wear test. The sliding distance L is a value (bxc) obtained by multiplying the test time c by the relative moving speed b. V represents the volume (wear volume) of the test piece T having worn in the wear test. As indicated in Equation (1), the specific wear quantity K means the volume of the test piece T having worn per unit sliding distance (1 mm) when the unit load (1 N) has been applied onto the test piece T. It is meant that, the smaller the specific wear quantity K is, the higher the wear resistance is.

Next, the wear volume V will be explained. FIG. 3B is a schematic view explaining the wear volume V. As shown by hatching in FIG. 3B, the shape of the worn portion in the test piece T can be considered to correspond to the shape of a portion, sinking in the test piece T at the end of the wear test, in the counter shaft A. The counter shaft A sinks most deeply in the radius $CP_0$ orthogonal to the sliding surface 1a of the test piece T from the center C at the circular bottom surface of the counter shaft A, and the sinking depth of the counter shaft A in the radius $CP_0$ is defined as wear depth d. Here, when the points of the lower limits of the portion sinking in the test piece T at the end of the wear test on the circumference of the bottom surface of the counter shaft A are designated as $P_1$ and $P_2$, respectively, the wear volume V can be obtained by multiplying the length a of the test piece T by the area of the portion enclosed by the arc $P_1 P_2$ and chord $P_1 P_2$ in the bottom surface of the counter shaft A. The area of the portion enclosed by the arc $P_1 P_2$ and chord $P_1 P_2$ in the bottom surface of the counter shaft A corresponds to the area obtained by subtracting the triangular area $S_2$ enclosed by the chord $P_1 P_2$ and radiuses $CP_1$, and $CP_2$ from the sectoral area $S_1$ enclosed by the arc $P_1 P_2$ and radiuses $CP_1$, and $CP_2$. Accordingly, the wear volume V can be calculated based on the following Equation (2).
[Equation 2]

$$V = (S_1 - S_2) \times a \quad \cdots \quad (2)$$

The sectoral area $S_1$ can be calculated based on the following Equation (3).
[Equation 3]

$$S_1 = \pi \times r^2 \times \frac{2\theta}{2\pi} \quad \cdots \quad (3)$$

wherein $\theta$ represents a half of the angle formed by the radius $CP_1$ or $CP_2$ at the center C of the bottom surface of the counter shaft A. It is noted that the angle $\theta$ satisfies the following Equation (4).
[Equation 4]

$$\cos\theta = \frac{r - d}{r} \quad \cdots \quad (4)$$

On the other hand, the triangular area $S_2$ can be calculated based on the following Equation (5) from the figural symmetry.
[Equation 5]

$$S_2 = \left\{ (r - d) \times \sqrt{r^2 - (r - d)^2} \times \frac{1}{2} \right\} \times 2 \quad \cdots \quad (5)$$

Measurement of the specific wear quantity K of the copper alloy for a bearing constituting the radial bearing 1 of this embodiment showed a good value of $1.14 \times 10^{-9}$ mm²/N.

As explained above, since the average width value among the particles 4 of the Mn-Si primary crystals 4 dispersed in the sliding surface 1a on which the counter shaft 2 slides is 3 $\mu$m or more in the present embodiment, the Mn-Si primary crystals 4 can be prevented from being broken when force is applied in the width direction of the Mn-Si primary crystals 4. Thus, the Mn-Si primary crystals 4 can be prevented from being broken and becoming a foreign matter. As a result, the foreign matter was prevented from promoting wear, so that good wear resistance could be realized. Also, by suppressing the Vickers hardness to 200 or less, even when Mn-Si primary crystals 4 are broken to form protrusions of the Mn-Si primary crystals 4, they keep conformability to the counter shaft 2, thereby making it possible to suppress the protrusions of the Mn-Si primary crystals 4. Hence, the protrusions of the Mn-Si primary crystals 4 can be prevented from damaging the counter shaft 2.

(2) Method for producing radial bearing

In the present embodiment, the radial bearing 1 is produced by carrying out the following steps: (a) melting, (b) continuous casting, (c) cutting and (d) mechanical processing in turn. Hereinafter, the respective steps will be explained.

a. Melting

Firstly, raw materials were weighed and provided so as to enable the formation of a copper alloy for a bearing containing 40.0 wt% of Zn, 4.0 wt% of Mn, 1.3 wt% of Si and 3.4 wt% of Bi, the balance consisting of Cu and inevitable impurities. In the present embodiment, a Cu ingot, a Zn ingot, a Cu-Mn ingot, a Cu-Si ingot and a Bi ingot, respectively, were weighed and provided. The raw materials should be provided in masses according to the target mechanical properties of the radial bearing 1. The target mechanical properties of the radial bearing 1 are determined, for example, according to the mechanical properties of the counter shaft 2. Next, the provided raw materials are heated up to 1200°C by a high-frequency induction furnace. Thus, the respective ingots melt. Thereafter, bubbles of Ar gas are dispersed and jetted to remove hydrogen gas and inclusions.

b. Continuous casting

Next, the molten materials for the copper alloy for a bearing were injected into a mold, and the copper alloy for a bearing is continuously pulled out through an opening of the mold in the casting direction and cooled, as it is, to room temperature, thereby forming a continuously cast bar of the copper alloy for a bearing. For example, casting is carried out at 1060°C by means of a mold formed of carbon, and the copper alloy for a bearing is pulled out at a pulling-out speed of 90 mm/min, thereby forming a continuously cast bar. It is considered that, in the solidification process in continuous casting from the molten state, the Mn-Si primary crystals 4 are crystallized out first; that the Cu-Zn matrix 5 is crystallized out next; and that a eutectic of Mn-Si and Cu-Zn is solidified at the end. It is noted that the diameter of the continuously cast bar of the copper alloy for a bearing is made larger by the machining quantity in the mechanical processing than the outer diameter of the radial bearing 1.

c. Cutting

Then, the continuously cast bar of the copper alloy for a bearing is cut for each thickness of the radial bearing 1 (thickness in the length direction of the counter shaft 2).

d. Mechanical processing

Finally, the continuously cast bar of the copper alloy for a bearing after cutting is subjected to machine work or press work, thereby completing the radial bearing 1. Here, machine work is carried out so as to form a through hole having an inner diameter which is larger by a predetermined quantity than the outer diameter of the counter shaft 2 and so that the outer diameter size of the radial bearing 1 coincides with a designed value.

(3) Experimental results:

Table 1 indicates the material formulations of Examples 1 and 2 and Comparative Examples 1 and 2. Table 2 indicates the experimental results of Examples 1 and 2 and Comparative Examples 1 and 2. It is noted that Example 2 is identical with the first embodiment. The values for the wear quantitative ratio in Table 2 are obtained by dividing the specific wear quantities K of Comparative Examples 1 and 2 and Examples 1 and 2 by the specific wear quantity K of Example 2.

[Table 1]

|  | Cu[wt%] | Zn[wt%] | Mn[wt%] | Si[wt%] | Bi[wt%] | Al[wt%] |
|---|---|---|---|---|---|---|
| Comparative Example 1 (free of Mn and Si) | Balance | 20 | - | - | - | 2.0 |
| Comparative Example 2 | Balance | 30 | 3.0 | 1.0 | - | 3.0 |
| Example 1 | Balance | 40 | 4.0 | 1.0 | 4.0 | - |
| Example 2 (First Embodiment) | Balance | 40 | 4.0 | 1.4 | 3.5 | - |

[Table 2]

| | Vickers hardness [HV] | Average width value among Mn-Si primary crystal particles [μm] | Average length value among Mn-Si primary crystal particles [μm] | Aspect ratio (length/width) | Wear quantity ratio |
|---|---|---|---|---|---|
| Comparative Example 1 (free of Mn and Si) | 230 | - | - | - | 2.3 |
| Comparative Example 2 | 210 | 2 | 13 | 6.5 | 1.5 |
| Example 1 | 150 | 3 | 9 | 3 | 1 |
| Example 2 (First Embodiment) | 185 | 8 | 20 | 2.5 | 1 (Baseline) |

Comparative Example 1 has material formulation which is free of Si and Mn, and this formulation is similar to the material formulation of the first embodiment except Si and Mn. Examples I and 2 have material formulation similar to that of the first embodiment. The Mn-Si primary crystals 4 of Example 1 were made smaller than those of Example 2 by adjusting the retention time and cooling speed in continuous casting. Also, in Comparative Example 2 formed by extrusion molding which easily provides the directionality in crystal grain shape as compared with continuous casting, the aspect ratio was 6.5, and the Mn-Si primary crystals 4 are formed in an elongated shape.

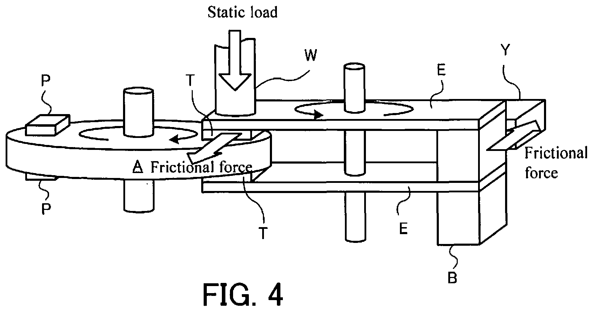

FIGs. 4A to 4C are histograms of the width of the Mn-Si primary crystals 4 in Comparative Example 2 and Examples 1 and 2, and FIGs. 4 D to 4F are histograms of the length of the Mn-Si primary crystals 4 in Comparative Example 2 and Examples 1 and 2. As shown in FIGs. 4A to 4C, the most frequent value for the width of the Mn-Si primary crystals 4 in Comparative Example 2 was less than 3 μm, whereas the most frequent value for the width of the Mn-Si primary crystals 4 in Examples 1 and 2 was 3 μm or more.

As indicated in Table 1, good wear resistance is obtained in Examples 1 and 2 which are greater in width of the Mn-Si primary crystals 4 and smaller in Vickers hardness than those in Comparative Example 2. It is considered that, in Comparative Example 1, no hard Mn-Si primary crystal 4 existed in the sliding surface 1a and thus wear proceeded. Also, it is considered that, in Comparative Example 2, hard Mn-Si primary crystals 4 existed in the sliding surface 1a but had a small width of 2 μm; and that the broken Mn-Si primary crystals 4 became a foreign matter, and thus wear proceeded. Further, it is considered that, in Comparative Example 2, the Vickers hardness was as high as HV210; that the state where the broken Mn-Si primary crystals 4 protruded on the sliding surface 1a was maintained; and that the counter shaft 2 was therefore damaged, and thus wear proceeded.

(4) Other embodiments

The above embodiment has illustrated an example of the radial bearing 1 formed of the copper alloy of the present invention, but other sliding members may be formed of the copper alloy of the present invention. For example, gear bushes for transmission, piston pin bushes and boss bushes may be formed of the copper alloy of the present invention. Also, the copper alloy for a bearing of the present invention may be produced by a production method other than continuous casting.

REFERENCE SIGNS LIST

1    Radial bearing
2    Counter shaft
3    Bi particle
4    Mn-Si primary crystal
5    Cu-Zn matrix

**Claims**

1.    A copper alloy for a bearing containing:

25 wt% or more and 48 wt% or less of Zn;
1 wt% or more and 7 wt% or less of Mn;
0.5 wt% or more and 3 wt% or less of Si; and
1 wt% or more and 10 wt% or less of Bi,

the balance consisting of inevitable impurities and Cu,
wherein the average width value among Mn-Si primary crystal particles dispersed in a sliding surface on which a counter shaft slides is 3 μm or more.

2. The copper alloy for a bearing according to claim 1, wherein the copper alloy has a Vickers hardness of 100 or more and 200 or less.

3. A bearing containing:

25 wt% or more and 48 wt% or less of Zn;
I wt% or more and 7 wt% or less of Mn;
0.5 wt% or more and 3 wt% or less of Si; and
1 wt% or more and 10 wt% or less of Bi,

the balance consisting of inevitable impurities and Cu,
wherein the average width value among Mn-Si primary crystal particles dispersed in a sliding surface on which a counter shaft slides is 3 μm or more.

4. The bearing according to claim 3, wherein the bearing has a Vickers hardness of 100 or more and 200 or less.

FIG. 1

FIG. 2C

FIG. 2D

FIG. 2A

FIG. 2B

Static load

FIG. 3A

FIG. 3B

Static load

W

P

T

Y

E

A Frictional force

Frictional force

T

E

P

B

FIG. 4

## INTERNATIONAL SEARCH REPORT

| International application No. |
| --- |
| PCT/JP2015/080988 |

A. CLASSIFICATION OF SUBJECT MATTER
*C22C9/04*(2006.01)i, *B22D11/00*(2006.01)i, *B22D11/20*(2006.01)i, *F16C17/02*(2006.01)i, *F16C33/12*(2006.01)i, *C22C1/02*(2006.01)n

According to International Patent Classification (IPC) or to both national classification and IPC

B. FIELDS SEARCHED

Minimum documentation searched (classification system followed by classification symbols)
C22C9/04, B22D11/00, B22D11/20, F16C17/02, F16C33/12, C22C1/02

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2004-137512 A (Daido Metal Co., Ltd.), 13 May 2004 (13.05.2004), & US 2004/0136860 A1    & GB 2394230 A | 1-4 |
| A | JP 2003-119527 A (Chuetsu Metal Works Co., Ltd.), 23 April 2003 (23.04.2003), (Family: none) | 1-4 |
| A | JP 2014-95127 A (Taiho Kogyo Co., Ltd.), 22 May 2014 (22.05.2014), & WO 2014/073630 A1 | 1-4 |

☐ Further documents are listed in the continuation of Box C.  ☐ See patent family annex.

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    25 January 2016 (25.01.16) | Date of mailing of the international search report<br>    02 February 2016 (02.02.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**EP 3 199 653 A1**

REFERENCES CITED IN THE DESCRIPTION

**Patent documents cited in the description**

- JP 3718147 B